# EUROPEAN PATENT SPECIFICATION

(11) **EP 2 714 373 B1**
(45) Date of publication and mention of the grant of the patent: **18.05.2016**
(21) Application number: 12803589.6
(22) Date of filing: 25.05.2012
(51) Int. Cl.: B29C 65/34, B65B 51/22, B65D 65/40

(54) **METHOD FOR MANUFACTURING A CONTAINER COMPRISING SEALING OF CONTAINER PARTS**
HERSTELLUNGSVERFAHREN FÜR EINEN BEHÄLTER MIT ABDICHTUNG VON BEHÄLTERTEILEN
PROCÉDÉ POUR LA FABRICATION D'UN CONTENEUR COMPRENANT LE SCELLEMENT DES PARTIES DU CONTENEUR

(30) Priority: 27.05.2011 SE 1150495
(43) Date of publication of application: 09.04.2014
(73) Proprietor: Å&R Carton Lund AB, 221 00 Lund (SE)
(72) Inventor: LENNART, Larsson, S-212 36 Malmö (SE)
(74) Representative: Zacco Sweden AB
(86) International application number: PCT/SE2012/050563
(87) International publication number: WO 2013/002702

(56) References cited:
- EP-A1- 0 890 516
- GB-A- 2 291 620
- US-A- 4 825 625
- US-A- 4 984 414
- US-A- 5 117 613
- US-A- 5 260 535
- US-A- 5 560 989
- US-A- 5 672 290
- US-A- 5 889 263
- US-A1- 2006 105 124
- US-A1- 2008 092 492

## Description

### TECHNICAL FIELD

The invention relates to a method of preparing a package comprising joining together of a first and a second piece of material, wherein at least the first piece of material is constituted by a multi-layered material of the laminate type comprising a mechanically stabilizing carton layer, an electrically conducting layer, and a weldable layer, where the mechanically stabilizing layer is constituted by a carton material whereby the first piece of material is arranged in such a manner that the weldable layer can be melted by supplying energy to the electrically conducting layer, and where the joining together comprises that the weldable layer is pressed against the second piece of material and that energy is supplied to the electrically conducting layer.

### STATE OF THE ART

Multi layered material or laminate comprising e.g. a layer of carton material, an aluminium foil and a weldable plastic layer, is commonly occurring in the preparation of packages e.g. for the food industry. The various parts of such packages are usually joined in such a manner that the parts are held together by pressure, where the aluminium foil is heated by inducing an electric current via an HF-generator, which in turn leads to the weldable layer melting and allows adhesion with a tight joint. Examples of such packages and methods are known from e.g. SE431187, CN101607607, US5889263 US5260535, and EP0890516.

Adjustment of time, power and bearing pressure of the heating/welding moment usually takes place by routine tests; speed of production and joint quality being the most important parameters. Typically, it is attempted to make use of the highest possible heating power, as high as the design in question and the materials in question would allow in order in this way to shorten the time required for this moment. For tested material and tested equipment it is normally no major problem to find a sufficiently good adjustment, but now and then problems nevertheless arise with the quality of the joints.

In order to reduce the consumption of materials and natural resources it is of interest to try to use thinner aluminium foil in the laminate than what is normally used. It has turned out, however, that in spite of usual optimization of time and heating power in laboratory scale, larger problems than normally have arisen with leaky joints when such laminates are run in a real package line, which consequently has caused a high leakage frequency.

Thus, there is a need for improving the method of preparation for such packages where it is ensured to a higher degree that the joints are tight. In particular this applies to untested materials, such as for instance laminate with thinner aluminium foil.

### DESCRIPTION OF THE INVENTION

It is the object of this invention to provide a method for automated preparation of packages of the type described above comprising a first unit and a second unit where the joining together of the units is improved as compared to existing methods. This object is obtained by a method according to claim 1. The dependent patent claims constitute advantageous embodiments, developments, and variants of the invention.

The invention relates to a method of preparing a package comprising joining together of a first and a second piece of material where at least the first piece of materiel is constituted by a multi-layered material of the laminate type comprising a mechanically stabilizing layer, an electrically conducting layer, and a weldable layer where the mechanically stabilizing layer is constituted by a carton material, where the first piece of material is arranged in such a manner that the weldable layer can be melted by supplying energy to the electrically conducting layer, and where the joining together comprises that the weldable layer is pressed against the second piece of material and that energy is supplied to the electrically conducting layer.

The invention is characterized in that the of supply of energy per time unit, i.e. the power supply, to the electrically conducting layer is varied during the period of time in which energy is supplied to the electrically conducting layer, where the power supply is lower at the end of the period of supply than at an earlier stage, where the power supply has a maximum, or near maximum, allowed value during a first phase of the period of supply, and where the first phase constitutes at least 40 % of the period of supply.

It is an advantageous effect of such a method that the power supply is adjusted to the decreasing heat removal because of the heating of the surrounding material. Expediently, the period of supply is commenced at the highest possible power so that heating and melting get to start as rapidly as possible. At the end of the period, the power can be significantly lowered to a kind of maintenance heat which allows the melted material the time to fill in unevennesses etc without risk of overheating. Between these extremes the power can be lowered stepwise or continuously so that the melting is at all times as efficient and rapid as possible without risk of overheating.

The method according to the invention is of interest in most applications in order to optimize the joining step, but is of even more interest in connection with the use of e.g. a thinner aluminium foil where the amount of residual heat after discontinuing the supply of energy is smaller than normally and might not suffice for the final flowing together of the weldable layer and filling in of unevenesses.

Typically, a portion of the weldable layer is pressed against the second piece of material whereby energy is supplied to at least a corresponding portion of the electrically conducting layer. Expediently, also the second piece of material is constituted by a multi-layered material comprising a mechanically stabilizing layer, an electrically conducting layer, and a weldable layer where the weldable layer can be melted by supplying energy to the electrically conducting layer. In one variant, the first and the second pieces of material constitute separate units, preferably the wall structure, lid or bottom, respectively, of the package. In another variant, the first and the second pieces of material constitute parts of the same unit, preferably end edges of a sheet which after joining to itself forms the wall structure of the package.

In one embodiment, the supply of energy takes place by induction of electric current.

In one variant of the material, the electrically conducting layer is arranged between the mechanically stabilizing layer and the weldable layer.

In one variant, the electrically conducting layer is constituted by an aluminium foil with a thickness of less than 18 micrometers, preferably less than 12 micrometers, preferably less than 8 micrometers.

In one variant, the weldable layer is constituted by meltable plastic, such as e.g. polyethene. Typically, the weldable layer has a thickness of less than 100 micrometers.

In one variant, the supply of power to the electrically conducting layer is varied by use of at least a first and a second control signal for power control of a generator arranged for supplying energy/power to the electrically conducting layer, where it is possible to keep the first and the second control signals in connected position at the same time for generating a first power supply, where at least the first signal can be disconnected while the second signal is still connected for generating a second power supply which is lower than the first power supply, and where the reduction in supplied power at a transition between the first phase and subsequent phases of the period of supply is achieved by disconnecting, from a position in which both control signals are connected, the first control signal.

In this way a rapid power reduction to a lower power level is obtainable by only disconnecting the first signal. Conventionally, it is required to change or alter the control signal in order to change the power output, which typically takes a longer period of time with the inertia often involved in signal generators as compared to just disconnecting a signal and letting an already connected signal control the supply of power.

In one variant, both the first and the second control signals are connected during the first phase of the period of supply, and only the second control signal is connected during the subsequent phase. This is a simple way, by using constant control signals, to arrange for constant and high supply of power during the first phase and a constant and low supply of power during the subsequent phase with a rapid power reduction in between (by disconnecting the first signal). Additional connectable and disconnectable control signals can be used for bringing about further rapid power changes during the period of supply.

### PREFERRED EMBODIMENTS

It has turned out that after optimization of supplied power, which can be effected in very short times (usually 0.15-0.25 seconds), you cannot reduce the pressure required for joining together with heat. The warm material often requires a longer period of time to flow together, even out unevennesses and embed contamination of the welding surfaces. Such contamination is constituted by the products filled into the packages, which often give off dust or in similar manner settle on the surfaces of the packages.

In experiments made with thinner aluminium it has turned out that such flowing together does not take place as rapidly. The plastic layers can be as thick as normally in order to give the same embedding properties and structure filling properties. The problem seems to reside in that at the test use is made of about 30 % thinner aluminium and thereby 30 % less stored heat energy was left in the aluminium foil when the supply was stopped. Presumably, this amount of residual energy is not sufficient for continuing melting/keeping the plastic warm so that at the welding pressure it can create a tight weld joint. During the supply of energy itself from a HF generator inducing an electric current in the electrically conducting aluminium layer, the aluminium foil gets considerably warmer than the plastic in which it is laminated. Optimization was made in the usual manner in order to go to the maximum possible power and thus temperature in order to keep down the time and thereby provide competitive speed. There is a maximum supply above which the aluminium gets too hot and the plastic almost decomposes, which is undesirable if it happens to an appreciable degree. As it is, it causes odour problems and reduces the strength of the joint.

By not stopping down the supply of energy after the time normally elapsed, but instead continuing some hundreds of seconds, but at reduced power, the system can act as if there was a heat store consisting of the 30 % more of aluminium which, as it is, is missing in case of thinner foil.

Such a rapid power change of the generator inducing the energy in the electrically conducting layer may call for special control/feed signals for the generator which, as it is, is loaded and will directly reduce power if its control signal is reduced. However, control signal generators are often somewhat sluggish because they are made so as to not be unnecessarily affected by sundry disturbances. Where the signal is a direct current, this sub-problem can be solved, in principle, by feeding two (or more) signals at the same time; expediently a high one and a low one and coupling these via diodes so that reverse current cannot occur. When the main heating time (the first phase) has elapsed, the high signal is simply cut off while the low signal is allowed to remain for the desired extra time. In that way, rapid signal change and consequently rapid power reduction are obtainable if the signal generator is not built for fast digital signal system.

In short, the problem identified by the inventor can be said to be that a thinner foil gives less residual energy/heat content which leads to impaired melting of plastic and leaky joint. A solution to this is to use high (the highest possible) heating power for a longer time (for example 0.20 seconds; main heating) followed by low power for a shorter time (for example 0.03 seconds; post-heating), possibly by feeding with dual signals to power source (HF-generator). This provides sufficient time and energy for good welding. Times and power must of course be adapted to the material etc in question.

In order for the system to be usable, i.e. efficient=fast due to the relation output/investment*manning, the cycle will be run as fast as possible. For gas-tight weld despite product contaminated welding surface relatively thick plastic layer is required. In order for the heat to rapidly penetrate through the plastic to the welding surface it required to rapidly proceed to the highest possible temperature in the heat generating layer. That is, maximum temperature gradient. Then the welding together commences most rapidly. If heating is performed for too long at high power the plastic gets too hot, and besides decomposition it will flow too lightly and be pressed away from the welding area.

Since there is more heat energy in the form of elevated temperature in the generation layer (where heat/energy is supplied), heating continues in the welding area after shutting down the power generator. This may be exploited by maintaining the pressure to complete the weld. If the pressure is released while the heat is still high or, even worse, still increasing, the joint, which now due to the lack of pressure must hold together, gets very weak and will hardly stand normal strains in the subsequent continued handling. I.e. the joint comes apart. If the heating time (the period of power supply) is extended it is possible to make use of a constant and, as compared with the extra high starting power according to the invention, somewhat lower power (i.e. as done conventionally), but because of extended heating time cycle time is lost; the joining step takes a longer time.

According to the invention you may increase maximally (even higher than if the same power is maintained for the whole period) and get the welding procedure to commence as rapidly as possible and compensate for a possible lost heat store because of thinner material by generating a sufficient amount of heat for a suitable period of time after shutting off of the high-power phase.

Initially, perhaps for some milliseconds, it is possible according to the invention to operate at a power supply generating higher temperature than what is conventionally deemed to be a maximum temperature (for constant effect) in order to, as rapidly as possible, raise the temperature in the generating layer and then to step down to an appropriate power corresponding to the heat conduction out in the plastic material and finally again a lower power corresponding to the heat store in a thicker material. The power can be adjusted continuously as a function of the reduced heat removal because of the heating of the surrounding material. As it is, cold material is farther and farther away. Thus, it is possible to control the generator effect according to a curve. The signal may be digital, but still follow a curve. This may be difficult to arrange, but common generators available in the market can be used if they are allowed to operate with an additional power signal level as described above. A further control signal can thus be disconnected after, for example, some milliseconds of the first phase.

The invention is particularly suited for systems with relatively thick welding layer and in particular heat generating layer. It may be metallically or in other manner electrically conducting. What has mainly been discussed above is induction heating. Conceivably, electrically conducting welding plastic (as alternative or complement to Al-foil) may be used. The invention is applicable even when the heating is capacitive. There you have a polar material in a high-frequency electrical field created between two electrodes instead of a conductive material in a high-frequency magnetic field created with an inductor fed with high-frequency alternating current. Such a heating system can also make use of several simultaneous control signals as described above, where the control signal or signals generating a higher power supply is/are thus shut off in order to rapidly reduce supplied power from the generator used when this lower power is obtained from a not shut off control signal.

Traditionally, there is often used 9 my (micrometer) of aluminium foil with 75 my. In experiments, use has been made of 6.35 my of aluminium foil with the same plastic thickness.

Thus, the thinner aluminium thickness is merely 70.5 % of the former, which can be expressed as there being 30 % less aluminium mass.

If use is made of just two constant power levels, a high power level from the start for main heating, and a low level at the end for post-heating, the interval 0.15-0.25 seconds for main heating and upwards of 0.10 seconds for post-heating should cover most interesting applications. In this case, power regulation can thus take place by two separate and constant control signals that are connected and disconnected. Expediently, both of these signals are connected during the main heating (the first phase) and when the post-heating is to commence (the subsequent phase) one of the control signals is disconnected, the one giving high power, so that lower power is supplied in accordance with the second control signal which is then already connected and does not have to be connected during the short time interval available. Hence, it is not necessary to change control signal according to this control method, merely to disconnect one of the signals.

The first phase (main heating) constitutes at least 40 % of the period of supply. Expediently, the subsequent phase (post-heating) is shortened as much as possible so that the first phase constitutes at least 60 % or even at least 80 % of the period of supply.

Expediently, the electrically conducting layer is constituted by aluminium. Because of its properties, Al is common for other reasons in packages, and by induction it is also possible to use it for the heating itself. An electrically conducting material of some kind is needed for the functioning, and if an Al-foil is already there this can expediently be used. The weldable layer, the welding layer, is typically a thermoplast, for example PE (polyethene). In principle, the aluminium barrier layer and the plastic constitute the welding layer with which the aluminium is coated or laminated against. Form stability is obtained from the carton on which the aluminium and welding plastic layers are laminated or by extrusion the carton has been coated with a binding layer of plastic which joins the aluminium foil and the carton and then a layer of welding plastic. It can be established that the invention mainly relates to multi-layered material of the laminate type where carton material constitutes a mechanically stabilizing material, aluminium a carrier material and electrically conducting material (for heat generation) and where plastic functions as the seal and weldable layer. Various layers can form part of the units to which the inventive method relates.

The invention is not limited to the embodiments described above, but can be varied within what is defined by the attached patent claims. For example, the electrically conducting layer can be constituted by another material than aluminium, for example an electrically conducting plastic material. Furthermore, the electrically conducting layer and the weldable layer may be replaced by a single layer which is both electrically conducting and weldable. Other layers may also form part of the multi-layered material.

## Claims

1. A method of preparing a package comprising joining together of a first and a second piece of material,
wherein at least the first piece of material is constituted by a multi-layered material of the laminate type comprising a mechanically stabilizing layer, an electrically conducting layer, and a weldable layer,
where the mechanically stabilizing layer is constituted by a carton material,
where the first piece of material is arranged in such a manner that the weldable layer can be melted by supplying energy to the electrically conducting layer, and
where the joining together comprises that the weldable layer is pressed against the second piece of material and that energy is supplied to the electrically conducting layer,
**characterized in**
**that** the energy supply per time unit, i.e. the power supply, to the electrically conducting layer is varied during the period of time in which energy is supplied to the electrically conducting layer, where the power supply is lower at the end of the period of supply than at an earlier stage,
where the power supply has a maximum, or near maximum, allowed value during a first phase of the period of supply, and
where the first phase constitutes at least 40 % of the period of supply.

2. A method according to claim 1,
**characterized in**
**that** the power supply is reduced stepwise and/or continuously during the period of supply.

3. A method according to claim 1 or 2,
**characterized in**
**that** the power supply is constant during the first phase.

4. A method according to any of the above claims,
**characterized in**
**that** a portion of the weldable layer is pressed against the second piece of material, where energy is supplied to at least a corresponding portion of the electrically conducting layer.

5. A method according to any of the above claims,
**characterized in**
**that** the second piece of material is also constituted by a multi-layered material comprising a mechanically stabilizing layer, an electrically conducting layer, and a weldable layer where the weldable layer can be melted by supplying energy to the electrically conducting layer.

6. A method according to any of the above claims,
**characterized in**
**that** the first and the second pieces of material constitute separate units, preferably a wall structure and a lid or bottom, respectively, of the package.

7. A method according to any of the claims 1-5,
**characterized in**
**that** the first and the second pieces of material constitute parts of the same unit, preferably end edges of a sheet which after joining to itself forms a wall structure of the package.

8. A method according to any of the above claims,
**characterized in**
**that** the energy supply takes place by induction of electric current.

9. A method according to any of the above claims,
**characterized in**
**that** the weldable layer is arranged on an outer surface of the multi-layered material.

10. A method according to any of the above claims,
**characterized in**
**that** the electrically conducting layer, the mechanically stabilizing layer, and the weldable layer constitute separate layers.

11. A method according to any of the above claims,
**characterized in**
**that** the electrically conducting layer is arranged between the mechanically stabilizing layer and the weldable layer.

12. A method according to any of the above claims,
**characterized in**
**that** the electrically conducting layer is constituted by an aluminium foil with a thickness of less than 18 micrometers, preferably less than 12 micrometers, preferably less than 8 micrometers.

13. A method according to any of the above claims,
**characterized in**
**that** the weldable layer is constituted by meltable plastic, such as for example polyethene.

14. A method according to any of the above claims,
**characterized in**
**that** the weldable layer has a thickness of less than 100 micrometers.

15. A method according to any of the above claims,
**characterized in**
**that** the power supply to the electrically conducting layer is varied by use of at least a first and a second control signal for power control of a generator arranged for supplying energy/power to the electrically conducting layer, wherein the first and the second control signals can be kept in connected position at the same time for generating a first power supply, wherein at least the first signal can be disconnected while the second signal is still connected for generating a second power supply which is lower than the first power supply, and wherein the reduction in supplied power at a transition between the first phase and subsequent phases of the period of supply is achieved by disconnecting, from a position in which both control signals are connected, the first control signal.

16. A method according to claim 15,
**characterized in**
**that** both the first and the second control signals are connected during the first phase of the period of supply, and that only the second control signal is connected during the subsequent phase.

## Patentansprüche

1. Verfahren zur Herstellung einer Verpackung umfassend das Zusammenfügen eines ersten und eines zweiten Werkstücks,
wobei zumindest das erste Werkstück aus einem mehrschichtigen Material der Art eines Laminats umfassend eine mechanisch stabilisierende Schicht, eine elektrisch leitende Schicht und eine schweißbare Schicht gebildet ist, wobei die mechanisch stabilisierende Schicht aus einem Kartonmaterial gebildet ist, wobei das erste Werkstück derart angeordnet ist, dass die schweißbare Schicht durch das Auftragen von Energie auf die elektrisch leitende Schicht geschmolzen werden kann, und
wobei das Zusammenfügen das Pressen der schweißbaren Schicht gegen das zweite Werkstück und das Auftragen von Energie auf die elektrisch leitende Schicht umfasst,
**dadurch gekennzeichnet, dass** die Energieversorgung je Zeiteinheit, d.h. die Stromversorgung, auf die elektrisch leitende Schicht während derjenigen Zeitperiode, in welcher Energie an die elektrisch leitende Schicht geliefert wird, variiert wird, wobei die Stromversorgung am Ende der Versorgungsperiode niedriger als in einem früheren Stadium ist,
wobei die Stromversorgung einen zulässigen Maximalwert, oder einen zulässigen nächstgelegenen Maximalwert aufweist, welcher während einer ersten Phase der Versorgungsperiode erlaubt ist, und
wobei die erste Phase zumindest 40 % der Versorgungsperiode darstellt.

2. Verfahren nach Anspruch 1, **dadurch gekennzeichnet, dass** die Energieversorgung stufenweise und/oder kontinuierlich während der Versorgungsperiode reduziert wird.

3. Verfahren nach Anspruch 1 oder 2, **dadurch gekennzeichnet, dass** die Energieversorgung während der ersten Phase konstant ist.

4. Verfahren nach einem der vorhergehenden Ansprüche, **dadurch gekennzeichnet, dass** ein Teil der schweißbaren Schicht gegen das zweite Werkstück gepresst wird, wobei Energie auf zumindest einen entsprechenden Teil der elektrisch leitenden Schicht aufgetragen wird.

5. Verfahren nach einem der vorhergehenden Ansprüche, **dadurch gekennzeichnet, dass** das zweite Werkstück auch aus einem mehrschichtigen Material umfassend eine mechanisch stabilisierende Schicht, eine elektrisch leitende Schicht und eine schweißbare Schicht gebildet ist, wobei die schweißbare Schicht durch das Auftragen von Energie auf die elektrisch leitende Schicht geschmolzen werden kann.

6. Verfahren nach einem der vorhergehenden Ansprüche, **dadurch gekennzeichnet, dass** das erste und das zweite Werkstück gesonderte Einheiten, vorzugsweise eine Wandstruktur und einen Deckel bzw. Boden, der Verpackung bilden.

7. Verfahren nach einem der Ansprüche 1-5, **dadurch gekennzeichnet, dass** das erste und das zweite Werkstück Teile derselben Einheit bilden, vorzugsweise Endkanten eines Blechs, welche nach Zusammenfügen mit sich selbst eine Wandstruktur der Verpackung bildet.

8. Verfahren nach einem der vorhergehenden Ansprüche, **dadurch gekennzeichnet, dass** die Energieversorgung durch Induktion elektrischen Stroms erfolgt.

9. Verfahren nach einem der vorhergehenden Ansprüche, **dadurch gekennzeichnet, dass** die schweißbare Schicht an einer Außenfläche des mehrschichtigen Materials vorgesehen ist.

10. Verfahren nach einem der vorhergehenden Ansprüche, **dadurch gekennzeichnet, dass** die elektrisch leitende Schicht, die mechanisch stabilisierende Schicht und die schweißbare Schicht gesonderte Schichten bilden.

11. Verfahren nach einem der vorhergehenden Ansprüche, **dadurch gekennzeichnet, dass** die elektrisch leitende Schicht zwischen der mechanisch stabilisierenden Schicht und der schweißbaren Schicht vorgesehen ist.

12. Verfahren nach einem der vorhergehenden Ansprüche, **dadurch gekennzeichnet, dass** die elektrisch leitende Schicht aus einer Aluminiumfolie mit einer Dicke von weniger als 18 Mikrometern, vorzugsweise weniger als 12 Mikrometern, vorzugsweise weniger als 8 Mikrometern, gebildet ist.

13. Verfahren nach einem der vorhergehenden Ansprüche, **dadurch gekennzeichnet, dass** die schweißbare Schicht aus schmelzbarem Kunststoff, wie beispielsweise Polyethylen, gebildet ist.

14. Verfahren nach einem der vorhergehenden Ansprüche, **dadurch gekennzeichnet, dass** die schweißbare Schicht eine Dicke von weniger als 100 Mikrometern aufweist.

15. Verfahren nach einem der vorhergehenden Ansprüche, **dadurch gekennzeichnet, dass** die Stromversorgung an die elektrisch leitende Schicht unter Verwendung zumindest eines ersten und eines zweiten Steuersignals für die Stromsteuerung eines Generators variiert wird, welcher für die Versorgung von Energie/Strom an die elektrisch leitende Schicht vorgesehen ist, wobei das erste und das zweite Steuersignal gleichzeitig in einer eingeschalteten Position gehalten werden können, um eine erste Stromversorgung zu erzeugen, wobei zumindest das erste Signal ausgeschaltet werden kann, während das zweite Signal immer noch eingeschaltet ist, um eine zweite Stromversorgung zu erzeugen, welche niedriger als die erste Stromversorgung ist, und wobei die Reduktion des gelieferten Stroms bei einem Übergang zwischen der ersten Phase und den nachfolgenden Phasen der Versorgungsperiode dadurch erreicht wird, dass, aus einer Position, in welcher die beiden Steuersignale eingeschaltet sind, das erste Steuersignal ausgeschaltet wird.

16. Verfahren nach Anspruch 15, **dadurch gekennzeichnet, dass** während der ersten Phase der Versorgungsperiode sowohl das erste als auch das zweite Steuersignal eingeschaltet werden, und dass während der nachfolgenden Phase nur das zweite Steuersignal eingeschaltet wird.

## Revendications

1. Procédé de préparation d'un emballage comprenant une jonction d'une première et d'une deuxième pièce de matériau,
dans lequel au moins la première pièce de matériau est constituée d'un matériau multicouche de type stratifié comprenant une couche de stabilisation mécanique, une couche électriquement conductrice et une couche soudable, dans lequel la couche de stabilisation mécanique est constituée d'un matériau en carton, dans lequel la première pièce de matériau est disposée d'une telle manière que la couche soudable peut être fondue par apport d'énergie à la couche électriquement conductrice, et
dans lequel la jonction comprend que la couche soudable est pressée contre la deuxième pièce de matériau et que l'énergie est fournie à la couche électriquement conductrice,
**caractérisé en ce**
**que** l'alimentation en énergie par unité de temps, à savoir l'alimentation en énergie, à la couche électriquement conductrice est variée pendant la période de temps pendant laquelle l'énergie est fournie à la couche électriquement conductrice, où l'alimentation en énergie est inférieure à la fin de la période d'alimentation qu'à un stade plus précoce,
dans lequel l'alimentation en énergie a une valeur autorisée maximale, ou à proximité maximale, au cours d'une première phase de la période de l'alimentation, et
dans lequel la première phase représente au moins 40% de la période d'alimentation.

2. Procédé selon la revendication 1,
**caractérisé en ce**
**que** l'alimentation en énergie est réduite par étapes et/ou en continu pendant la période d'alimentation.

3. Procédé selon la revendication 1 ou 2,
**caractérisé en ce**
**que** l'alimentation en énergie est constante au cours de la première phase.

4. Procédé selon l'une quelconque des revendications précédentes,
**caractérisé en ce**
**qu'**une portion de la couche soudable est pressée contre la deuxième pièce de matériau, l'énergie étant fournie à la portion correspondante de la couche électriquement conductrice.

5. Procédé selon l'une quelconque des revendications précédentes,
**caractérisé en ce**
**que** la deuxième pièce de matériau est également constituée d'un matériau multicouche comprenant une couche de stabilisation mécanique, une couche électriquement conductrice et une couche soudable, la couche soudable pouvant être fondue par apport d'énergie à la couche électriquement conductrice.

6. Procédé selon l'une quelconque des revendications précédentes,
**caractérisé en ce**
**que** les première et deuxième pièces de matériau constituent des unités séparées, de préférence respectivement une structure de paroi et un couvercle ou un fond de l'emballage.

7. Procédé selon l'une quelconque des revendications 1-5,
**caractérisé en ce**
**que** les première et deuxième pièces de matériau constituent des parties de la même unité, de préférence des bords d'extrémité d'une feuille qui, après assemblage à elle-même, forme une structure de paroi de l'emballage.

8. Procédé selon l'une quelconque des revendications précédentes,
**caractérisé en ce**
**que** l'alimentation en énergie a lieu par induction de courant électrique.

9. Procédé selon l'une quelconque des revendications précédentes,
**caractérisé en ce**
**que** la couche soudable est disposée sur une surface extérieure du matériau multicouche.

10. Procédé selon l'une quelconque des revendications précédentes,
**caractérisé en ce**
**que** la couche de stabilisation mécanique, la couche électriquement conductrice et la couche soudable constituent des couches distinctes.

11. Procédé selon l'une quelconque des revendications précédentes,
**caractérisé en ce**
**que** la couche électriquement conductrice est agencée entre la couche de stabilisation mécanique et la couche soudable.

12. Procédé selon l'une quelconque des revendications précédentes,
**caractérisé en ce**
**que** la couche électriquement conductrice est constituée par une feuille d'aluminium ayant une épaisseur inférieure à 18 micromètres, de préférence inférieure à 12 micromètres, de préférence inférieure à 8 micromètres.

13. Procédé selon l'une quelconque des revendications précédentes,
**caractérisé en ce**
**que** la couche soudable est constituée par une matière plastique fusible, tel que par exemple du polyéthylène.

14. Procédé selon l'une quelconque des revendications précédentes,
caractérisé en ce
la couche soudable a une épaisseur inférieure à 100 micromètres.

15. Procédé selon l'une quelconque des revendications précédentes,
**caractérisé en ce**
**que** l'alimentation en énergie à la couche électriquement conductrice est modifiée par l'utilisation d'au moins un premier et un deuxième signal de commande pour la commande de puissance d'un générateur agencé pour fournir de l'énergie/de la puissance à la couche électriquement conductrice, dans lequel les premier et le deuxième signaux de commande peuvent être maintenus en position de connexion en même temps pour générer une première alimentation en énergie, dans lequel au moins le premier signal peut être déconnecté pendant que le deuxième signal est toujours connecté pour générer une deuxième alimentation en énergie qui est inférieure à la première alimentation en énergie, et dans lequel la réduction de la puissance fournie à une transition entre la première phase et des phases ultérieures de la période d'alimentation est obtenue en déconnectant, d'une position dans laquelle les deux signaux de commande sont connectés, le premier signal de commande.

16. Procédé selon la revendication 15,
**caractérisé en ce**
**que** le premier et le deuxième signaux de commande sont connectés au cours de la première phase de la période d'alimentation, et que seul le deuxième signal de commande est connecté pendant la phase suivante.
